Europäisches Patentamt

**European Patent Office**

Office européen des brevets

(19)

(11) Numéro de publication : **0 099 152 B1**

(12)

# FASCICULE DE BREVET EUROPÉEN

(45) Date de publication du fascicule du brevet :
02.01.86

(21) Numéro de dépôt : 83200963.3

(22) Date de dépôt : 29.06.83

(51) Int. Cl.⁴ : **C 01 B 11/06**

(54) **Procédé pour la production de cristaux d'hypochlorite de sodium hydraté.**

(30) Priorité : **12.07.82 FR 8212334**

(43) Date de publication de la demande :
**25.01.84 Bulletin 84/04**

(45) Mention de la délivrance du brevet :
**02.01.86 Bulletin 86/01**

(84) Etats contractants désignés :
**AT BE CH DE FR GB IT LI NL**

(56) Documents cités :
**CHEMICAL ABSTRACTS, vol. 82, no. 8, 24 février
1975, page 170, no. 45950u, Columbus, Ohio, USA**

(73) Titulaire : **SOLVAY & Cie (Société Anonyme)
Rue du Prince Albert, 33
B-1050 Bruxelles (BE)**

(72) Inventeur : **Brahm, Jacques
Snoekgracht, 10
B-1850 Grimbergen (BE)**
Inventeur : **Demilie, Paul
Avenue Paule, 18
B-1150 Bruxelles (BE)**

EP 0 099 152 B1

## Description

La présente invention a pour objet un procédé pour la production de cristaux d'hypochlorite de sodium hydraté de formule générale $NaClO \cdot 2,5H_2O$, à partir d'une solution aqueuse d'hypochlorite de sodium, par dissolution d'hydroxyde de sodium dans celle-ci et refroidissement de la solution résultante d'hypochlorite et d'hydroxyde de sodium.

Dans un procédé connu de ce type, on met en œuvre une solution aqueuse d'hypochlorite de sodium obtenue par la fusion, au-dessus de 27 °C, de cristaux d'hypochlorite de sodium pentahydraté (CENTRAL PATENTS INDEX, Basic Abstracts Journal, Section E, Week U52, Derwent Publication Ltd, Londres, Grande-Bretagne, abrégé 80931 U-E : demande de brevet japonais 7342797 de Toa Gosei Chemical Ind. Co Ltd.).

Ce procédé connu présente l'inconvénient d'imposer une étape préalable de fabrication de cristaux d'hypochlorite de sodium pentahydraté et le stockage de ceux-ci jusqu'au moment de les fondre. Du fait de la faible stabilité des cristaux d'hypochlorite de sodium pentahydraté à température élevée, leur cristallisation nécessite des conditions opératoires strictes et un grand soin, ce qui rend sa mise en œuvre difficile. Par ailleurs, la récupération des cristaux d'hypochlorite de sodium pentahydraté par filtration s'avère généralement une opération lente et difficile, et le stockage des cristaux jusqu'au moment de les fondre impose le respect de conditions sévères de température et de degré hygrométrique, pour éviter leur décomposition.

L'invention remédie à ces désavantages du procédé connu précité, en fournissant un procédé pour la cristallisation directe de cristaux d'hypochlorite de sodium hydraté, de formule générale $NaClO \cdot 2,5H_2O$, qui ne nécessite pas une étape préalable de cristallisation d'hypochlorite de sodium pentahydraté et qui évite de ce fait le problème posé par la filtration de tels cristaux et par leur stockage.

L'invention concerne donc un procédé pour la production de cristaux d'hypochlorite de sodium hydraté de formule générale $NaClO \cdot 2,5H_2O$ selon lequel on ajoute de l'hydroxyde de sodium à une solution aqueuse d'hypochlorite de sodium, on refroidit la solution résultante d'hypochlorite et d'hydroxyde de sodium et on sépare les cristaux d'hypochlorite de sodium hydraté et une eau mère ; selon l'invention, on met en œuvre une solution aqueuse d'hypochlorite de sodium contenant de 25 à 45,3 % en poids d'hypochlorite de sodium que l'on prépare en introduisant du chlore dans une solution aqueuse d'hydroxyde de sodium se trouvant à au moins 15 °C afin de cristalliser du chlorure de sodium et en séparant les cristaux de chlorure de sodium formés.

Par la suite, on entend, par hypochlorite de sodium hydraté, des cristaux d'hypochlorite de sodium hydraté de formule générale $NaClO \cdot 2,5H_2O$. L'expression « solution d'hypochlorite de sodium » désigne la solution aqueuse contenant de 25 à 45,3 % en poids d'hypochlorite de sodium, obtenue à l'issue de l'introduction de chlore dans la solution d'hydroxyde de sodium et l'expression « solution d'hypochlorite et d'hydroxyde de sodium » désigne la solution obtenue après dissolution d'hydroxyde de sodium dans la solution d'hypochlorite de sodium.

Dans le procédé selon l'invention, les limites inférieure (25 %) et supérieure (45,3 %) de la concentration de la solution d'hypochlorite de sodium définissent l'intervalle des concentrations en dehors duquel il devient pratiquement impossible de cristalliser de l'hypochlorite de sodium hydraté de manière économique et sûre, par addition d'hydroxyde de sodium à la solution d'hypochlorite de sodium et refroidissement de la solution résultante d'hypochlorite et d'hydroxyde de sodium.

En pratique, il est avantageux de sélectionner la concentration de la solution d'hypochlorite de sodium entre 30 et 40 % en poids, les teneurs pondérales comprises entre 35 et 40 % étant préférées.

La concentration de la solution d'hydroxyde de sodium et la quantité de chlore mise en œuvre doivent être réglées pour conduite à l'obtention d'une solution d'hypochlorite de sodium dont la concentration en hypochlorite de sodium tombe dans l'intervalle de concentration précité. En général, on préfère mettre en œuvre une quantité de chlore suffisante pour réagir avec la totalité de l'hydroxyde de sodium de la solution d'hydroxyde de sodium car, toutes autres choses égales, il y correspond les rendements maximum de cristallisation d'hypochlorite de sodium hydraté.

La température de la solution d'hydroxyde de sodium doit être fixée en fonction de sa composition et de la quantité de chlore mise en œuvre, pour éviter que de l'hypochlorite de sodium cristallise (généralement à l'état pentahydraté) pendant l'introduction du chlore. D'une manière générale, lors de l'introduction du chlore dans la solution d'hydroxyde de sodium, sa température doit être d'au moins 15 °C, et d'autant plus élevée que la solution d'hypochlorite de sodium produite à une teneur élevée en hypochlorite de sodium dissous.

La température maximum de la solution d'hydroxyde de sodium pendant l'introduction du chlore est limitée par la stabilité de l'hypochlorite de sodium, et il est indiqué, en pratique, de ne pas dépasser 50 °C. En règle générale, il est souhaitable d'opérer à une température supérieure à 18 °C, de préférence entre 20 et 40 °C, les températures comprises entre 22 et 35 °C étant particulièrement adéquates.

Pendant l'introduction du chlore dans la solution d'hydroxyde de sodium, du chlorure de sodium cristallise. Son élimination de la solution d'hypochlorite de sodium ne présente pas de difficulté et peut être exécutée par exemple par une filtration ou une décantation.

Pendant l'addition d'hydroxyde de sodium à la solution d'hypochlorite de sodium, la température de celle-ci doit être suffisante pour éviter une cristallisation d'hypochlorite de sodium. En général, il suffit de la maintenir à la température qu'elle avait à l'issue de l'introduction du chlore.

L'hydroxyde de sodium est de préférence ajouté à l'état solide particulaire, généralement à l'état d'une poudre. En variante, on peut aussi, éventuellement, l'ajouter à l'état d'une suspension dans une solution aqueuse ou d'une solution aqueuse. Il est cependant avantageux que la solution résultante d'hypochlorite et d'hydroxyde de sodium contienne plus de 10 % en poids d'hypochlorite de sodium, de préférence au moins 15 %.

La quantité d'hydroxyde de sodium qu'il convient d'ajouter à la solution d'hypochlorite de sodium dépend de la concentration de celle-ci. En règle générale, il convient d'ajouter un poids d'hydroxyde de sodium suffisant pour que la solution résultante d'hypochlorite et d'hydroxyde de sodium contienne plus de 10 % en poids d'hydroxyde de sodium, de préférence au moins 15 %.

En variante, après l'addition d'hydroxyde de sodium à la solution d'hypochlorite de sodium, on peut soumettre la solution d'hypochlorite et d'hydroxyde de sodium résultante à une évaporation partielle, pour adapter ses concentrations en hypochlorite de sodium et en hydroxyde de sodium aux valeurs précitées.

La cristallisation de l'hypochlorite de sodium hydraté s'opère par refroidissement de la solution d'hypochlorite et d'hydroxyde de sodium. Le choix de la température de refroidissement dépend de la concentration de cette solution. En général, il convient qu'elle soit inférieure à 15 °C, de préférence à 10 °C. Toutes autres choses égales, le rendement de la cristallisation de l'hypochlorite de sodium hydraté est d'autant plus élevé que la température du refroidissement est basse. Pour des considérations de nature économique, il n'y a toutefois pas intérêt, en général, à descendre au-dessous de − 10 °C, les températures comprises entre − 5 et + 2 °C s'avérant les plus adéquates dans la majorité des cas.

A l'issue du refroidissement de la solution d'hypochlorite et d'hydroxyde de sodium, on sépare les cristaux d'hypochlorite de sodium hydraté formés et une eau mère. La méthode de séparation des cristaux peut être, par exemple, une filtration, une sédimentaiton et décantation ou une centrifugation.

L'eau mère est une solution d'hydroxyde de sodium, saturée en hypochlorite de sodium, qu'il est avantageux de valoriser.

A cet effet, dans une forme d'exécution avantageuse du procédé selon l'invention, on recycle l'eau mère pour reconstituer la solution aqueuse d'hydroxyde de sodium de départ dans laquelle on introduit le chlore.

Dans cette forme d'exécution du procédé selon l'invention, il convient généralement d'ajuster périodiquement la composition de l'eau mère recyclée, de manière à maintenir, dans la solution d'hypochlorite de sodium, une teneur pondérale en hypochlorite de sodium comprise entre 25 et 45,3 %. Cet ajustement dépend de l'ensemble des conditions opératoires du procédé et il peut être calculé sans difficulté dans chaque cas particulier.

Avant d'ajuster la composition de l'eau mère et de la recycler, il va de soi qu'il convient de la réchauffer pour l'amener à la température choisie pour l'introduction du chlore.

Le procédé selon l'invention peut être réalisé dans une installation comprenant un réacteur-cristalliseur alimenté avec la solution aqueuse d'hydroxyde de sodium et le chlore, un filtre pour le traitement de la suspension aqueuse recueillie du réacteur-cristalliseur en sorte d'en séparer des cristaux de chlorure de sodium et la solution d'hypochlorite de sodium, une chambre de dissolution alimentée avec la solution d'hypochlorite de sodium provenant du filtre et avec de l'hydroxyde de sodium, un refroidisseur-cristalliseur alimenté avec la solution d'hypochlorite et d'hydroxyde de sodium recueillie de la chambre de dissolution et un séparateur mécanique (par exemple un filtre ou une centrifugeuse) pour le traitement de la suspension aqueuse recueillie du refroidisseur-cristalliseur, en sorte d'en séparer les cristaux d'hypochlorite de sodium hydraté et l'eau mère.

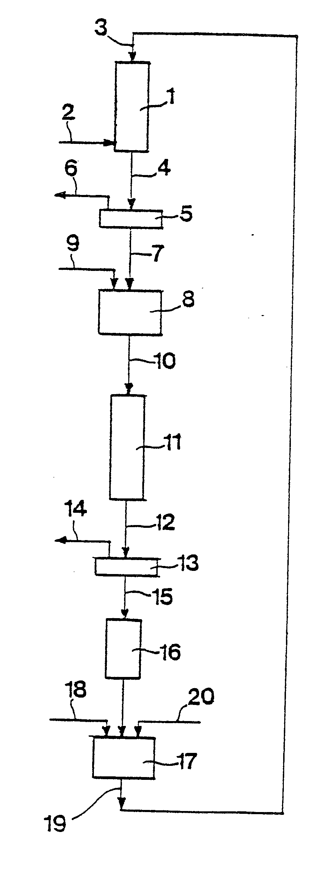

Des particularités de l'invention vont apparaître au cours de la description suivante d'une forme de réalisation particulière du procédé, en référence à la figure unique du dessin annexé qui représente un schéma du procédé.

Dans un réacteur-cristalliseur 1, on introduit, d'une part, 1 911 g d'une solution aqueuse (3) contenant, par kg, 115 g d'hypochlorite de sodium, 32g de chlorure de sodium, 350,4 g d'hydroxyde de sodium et 501,9 g d'eau et, d'autre part, 594,1 g de chlore (2). La température de la solution dans le réacteur-cristalliseur 1 est maintenue à 24 °C environ.

On soutire du réacteur-cristalliseur 1 une suspension aqueuse (4) de cristaux de chlorure de sodium, que l'on dirige sur un filtre 5. On recueille sur le filtre 5, 489, 5 g de cristaux de chlorure de sodium que l'on évacue en 6, et 2 015 g d'une solution aqueuse d'hypochlorite de sodium (7) contenant, par kg, 419,1 g d'hypochlorite de sodium et 30,3 g de chlorure de sodium dissous.

La solution d'hypochlorite de sodium (7), maintenue à environ 25 °C, est introduite dans une chambre de dissolution 8, où on y dissout 635,6 g d'hydroxyde de sodium (9) à l'état sec et anhydre.

On soutire de la chambre 8, 2 651 g d'une solution aqueuse d'hypochlorite et d'hydroxyde de sodium (10) à environ 25 °C et on la dirige vers un refroidisseur-cristalliseur 11 où on abaisse sa température à 0 °C environ, de manière à cristalliser de l'hypochlorite de sodium hydraté de formule générale $NaClO \cdot 2,5H_2O$. La suspension aqueuse (12) recueillie du cristalliseur 11 est traitée sur un filtre 13 où on recueillie 1 000 g de cristaux d'hypochlorite de sodium hydraté (14) et 1 651 g d'eau mère (15) contenant

3

13,4 % en poids d'hypochlorite de sodium dissous, 3,7 % en poids de chlorure de sodium 38,5 % en poids d'hydroxyde de sodium et 44,4 % en poids d'eau.

L'eau mère (15) est transférée successivement dans un réchauffeur 16 où sa température est portée à 24 °C, puis dans une enceinte 17 où on lui fait un ajout de 33,9 g d'hydroxyde de sodium (18) et un ajout de 225,9 g d'eau (20). Le poids de l'ajout d'hydroxyde de sodium (18) correspond à la différence entre le poids équivalent en hydroxyde de sodium des cristaux soutirés en 14 et le poids d'hydroxyde de sodium introduit en 9, dans la chambre de dissolution 8. Le poids de l'ajout d'eau (20) correspond à la différence entre le poids d'eau des cristaux soutirés en 14 et le poids d'eau engendré par la réaction du chlore (2) sur la solution d'hydroxyde de sodium (3) dans le réacteur-cristalliseur 1.

L'eau mère recueillie en 19 de l'enceinte 17 est recyclée dans le réacteur-cristalliseur 1, pour former la solution de départ (3) d'un nouveau cycle opératoire.

On a consigné au tableau qui suit, les conditions opératoires du procédé qui vient d'être décrit.

| | Poids total (g) | Composition (% en pds) | | | | Température (°C) |
|---|---|---|---|---|---|---|
| | | NaClO | NaCl | NaOH | $H_2O$ | |
| Solution (3) | 1911 | 11,5 | 3,2 | 35,04 | 50,19 | 24 |
| Chlore (2) | 594,1 | – | – | – | – | 24 |
| Cristaux de chlorure de sodium (6) | 489,5 | – | 100 | – | – | – |
| Solution d'hypochlorite de sodium (7) | 2015 | 41,91 | 3,03 | – | 55,06 | 24 |
| Hydroxyde de sodium (9) | 635,6 | – | – | 100 | – | 24 |
| Solution d'hypochlorite et d'hydroxyde de sodium (10) | 2651 | 31,8 | 2,3 | 24 | 41,9 | 24 |
| Suspension d'hypochlorite de sodium hydraté (12) | 2651 | 31,8 | 2,3 | 24 | 41,9 | 0 |
| Cristaux d'hypochlorite de sodium hydraté (14) | 1000 | 62,3 | – | – | 37,7 | 0 |
| Eau mère (15) | 1651 | 13,4 | 3,7 | 38,5 | 44,4 | 0 |
| Hydroxyde de sodium (18) | 33,9 | – | – | 100 | – | 24 |
| Eau (20) | 225,9 | – | – | – | 100 | 24 |
| Eau mère (19) | 1911 | 11,5 | 3,2 | 35,04 | 50,19 | 24 |

## Revendications

1. Procédé pour la production de cristaux d'hypochlorite de sodium hydraté de formule générale $NaClO \cdot 2,5H_2O$ selon lequel on ajoute de l'hydroxyde de sodium (9) à une solution aqueuse d'hypochlorite de sodium (7), on refroidit (11) la solution résultante d'hypochlorite et d'hydroxyde de sodium (10), et on sépare les cristaux d'hypochlorite de sodium hydraté (14) et une eau-mère (15), caractérisé en ce qu'on met en œuvre une solution aqueuse d'hypochlorite de sodium (7) contenant de 25 à 45,3 % en poids d'hypochlorite de sodium que l'on prépare en introduisant du chlore (2) dans une solution aqueuse d'hydroxyde de sodium (3) se trouvant à au moins 15 °C afin de cristalliser du chlorure de sodium et en séparant les cristaux de chlorure de sodium formés (6).

2. Procédé selon la revendication 1, caractérisé en ce qu'on met en œuvre une solution aqueuse d'hypochlorite de sodium (7) contenant de 30 à 40 % en poids d'hypochlorite de sodium.

3. Procédé selon la revendication 2, caractérisé en ce qu'on met en œuvre une solution aqueuse d'hypochlorite de sodium (7) contenant entre 35 % et 40 % en poids d'hypochlorite de sodium.

4. Procédé selon l'une quelconque des revendications 1 à 3, caractérisé en ce qu'on introduit dans la solution aqueuse d'hydroxyde de sodium (3) une quantité suffisante de chlore (2) pour réagir avec la totalité de l'hydroxyde de sodium qu'elle contient.

5. Procédé selon l'une quelconque des revendications 1 à 4, caractérisé en ce que la solution

# 0 099 152

aqueuse d'hydroxyde de sodium (3) dans laquelle on introduit le chlore (2) se trouve à une température comprise entre 22 et 35 °C.

6. Procédé selon l'une quelconque des revendications 1 à 5, caractérisé en ce qu'on règle la quantité d'hydroxyde de sodium (9) que l'on ajoute à la solution d'hypochlorite de sodium (7), pour que celle-ci contienne au moins 15 % en poids d'hydroxyde de sodium et au moins 15 % en poids d'hypochlorite de sodium.

7. Procédé selon l'une quelconque des revendications 1 à 6, caractérisé en ce qu'on refroidit la solution d'hypochlorite et d'hydroxyde de sodium (10) au-dessous de 10 °C.

8. Procédé selon la revendication 7, caractérisé en ce qu'on refroidit la solution d'hypochlorite et d'hydroxyde de sodium (10) à une température comprise entre − 5° et + 2 °C.

9. Procédé selon l'une quelconque des revendications 1 à 8, caractérisé en ce qu'on recycle l'eau mère (15, 19) pour reconstituer la solution aqueuse d'hydroxyde de sodium (3).

10. Procédé selon la revendication 9, caractérisé en ce qu'avant de recycler l'eau mère (15), on lui ajoute, d'une part, un poids d'hydroxyde de sodium (18) égal à la différence entre le poids équivalent en hydroxyde de sodium des cristaux d'hypochlorite de sodium hydraté (14) et le poids d'hydroxyde de sodium (9) ajouté à la solution d'hypochlorite de sodium (7) et, d'autre part, un poids d'eau (20) égal à la différence entre le poids d'eau des cristaux d'hypochlorite de sodium hydraté (14) et le poids d'eau engendrée par la réaction du chlore (2) sur la solution d'hydroxyde de sodium (3).

## Claims

1. Process for the production of crystals of hydrated sodium hypochlorite of the general formula $NaClO \cdot 2.5H_2O$ according to which there is added sodium hydroxide (9) to an aqueous sodium hypochlorite solution (7), the resulting solution of sodium hypochlorite and sodium hydroxide (10) is cooled (11) and the crystals of hydrated sodium hypochlorite (14) and a mother liquor (15) are separated, characterised in that there is employed an aqueous sodium hypochlorite solution (7) containing from 25 to 45.3 % by weight of sodium hypochlorite, which is prepared by introducing chlorine (2) into an aqueous sodium hydroxide solution (3) which is at not less than 15 °C, so as to cause the sodium chloride to crystallise out, and separating off the sodium chloride crystals formed (6).

2. Process according to Claim 1, characterised in that an aqueous sodium hypochlorite solution (7), containing from 30 to 40 % by weight of sodium hypochlorite is employed.

3. Process according to Claim 2, characterised in that an aqueous sodium hypochlorite solution (7), containing from 35 to 40 % by weight of sodium hypochlorite is employed.

4. Process according to any one of Claims 1 to 3, characterised in that there is introduced into the aqueous sodium hydroxide solution (3) an amount of chlorine (2) which is sufficient to react with the whole of the sodium hydroxide which the solution contains.

5. Process according to any one of Claims 1 to 4, characterised in that the aqueous sodium hydroxide solution (3) into which the chlorine (2) in introduced is at a temperature of between 22 and 35 °C.

6. Process according to any one of Claims 1 to 5, characterised in that the amount of sodium hydroxide (9) which is added to the sodium hypochlorite solution (7) is regulated so that the said solution contains not less than 15 % by weight of sodium hydroxide and not less than 15 % by weight of sodium hypochlorite.

7. Process according to any one of Claims 1 to 6, characterised in that the solution of sodium hypochlorite and sodium hydroxide (10) is cooled to below 10 °C.

8. Process according to Claim 7, characterised in that the solution of sodium hypochlorite and sodium hydroxide (10) is cooled to a temperature of between − 5° and + 2 °C.

9. Process according to any one of Claims 1 to 8, characterised in that the mother liquor (15, 19) is recycled so as to reconstitute the aqueous sodium hydroxide solution (3).

10. Process according to Claim 9, characterised in that before recycling the mother liquor (15) there is added to it, on the one hand, a weight of sodium hydroxide (18) equal to the difference between the weight of sodium hydroxide equivalent to the crystals of hydrated sodium hypochlorite (14) and the weight of sodium hydroxide (9) added to the sodium hypochlorite solution (7) and, on the other hand, a weight of water (20) equal to the difference between the weight of water of the hydrated sodium hypochlorite crystals (14) and the weight of water generated by the reaction of the chlorine (2) whith the sodium hydroxide solution (3).

## Patentansprüche

1. Verfahren zur Herstellung von kristallinem, wasserhaltigem Natriumhypochlorit der allgemeinen Formel $NaClO \cdot 2,5H_2O$ nach welchem man Natriumhydroxyd (9) zu einer wäßrigen Lösung von Natriumhypochlorit (7) zugibt, die erhaltene Lösung von Natriumhypochlorit und -hydroxyd (10) abkühlt (11) und die Kristalle des wasserhaltigen Natriumhypochlorits (14) und eine Mutterlauge (15) trennt, dadurch gekennzeichnet, daß man eine wäßrige Natriumhypochlorit-Lösung (7) mit 25 bis 45,3 Gew.-% Natriumhypochlorit, die man durch Einleiten von Chlor (2) in eine wäßrige Natriumhydroxyd-Lösung (3) herstellt, verarbeitet, wobei man sie auf wenigstens 15 °C zur Kristallisation des Natriumchlorids hält, und das gebildete kristalline Natriumchlorid (6) davon abtrennt.

2. Verfahren nach Anspruch 1, dadurch gekennzeichnet, daß man eine wäßrige Natriumhypochlorit-Lösung (7) mit 30-40 Gew.-% Natriumhypochlorit verarbeitet.

3. Verfahren nach Anspruch 2, dadurch gekennzeichnet, daß man eine wäßrige Natriumhypochlorit-Lösung (7) mit 35 bis 40 Gew.-% Natriumhypochlorit verarbeitet.

4. Verfahren nach einem der Ansprüche 1-3, dadurch gekennzeichnet, daß man zu einer wäßrigen Natriumhydroxyd-Lösung (3) eine zur Umsetzung mit der Gesamtheit des darin enthaltenen Natriumhydroxyds ausreichende Menge Chlor (2) zugibt.

5. Verfahren nach einem der Ansprüche 1-4, dadurch gekennzeichnet, daß die wäßrige Natriumhydroxyd-Lösung (3), in die man das Chlor (2) einleitet, eine Temperatur zwischen 22 und 35 °C hat.

6. Verfahren nach einem der Ansprüche 1-5, dadurch gekennzeichnet, daß man die Menge des Natriumhydroxyds (9), die man zu der Natriumhypochlorit-Lösung (7) zugibt, regelt, damit diese mindestens 15 Gew.-% Natriumhydroxyd und mindestens 15 Gew.-% Natriumhypochlorit enthält.

7. Verfahren nach einem der Ansprüche 1-6, dadurch gekenzeichnet, daß man die Natriumhypochlorit-und -hydroxy-Lösung (10) auf unter 10 °C abkühlt.

8. Verfahren nach Anspruch 7, dadurch gekennzeichnet, daß man die Natriumhypochlorit und -hydroxyd-Lösung (10) auf eine Temperatur zwischen − 5° und + 2 °C abkühlt.

9. Verfahren nach einem der Ansprüche 1-8, dadurch gekennzeichnet, daß man die Mutterlauge (15, 19) zur Wiederherstellung der wäßrigen Natriumhydroxyd-Lösung (3) zurückführt.

10. Verfahren nach Anspruch 9, dadurch gekennzeichnet, daß man vor dem Zurückführen der Mutterlauge (15) ihr einerseits eine Menge an Natriumhydroxyd (18) entsprechend der Differenz zwischen dem Äquivalentgewicht an Natriumhydroxyd der Kristalle des wasserhaltigen Natriumhypochlorits (14) und dem Gewicht des Natriumhydroxyds (9), das zu der Natriumhypochlorit-Lösung (7) zugegeben wurde, und andererseits eine Wassermenge (20) entsprechend der Differenz zwischen dem Gewicht des Wassers der Kristalle des wasserhaltigen Natriumhypochlorits (14) und dem Gewicht des Wassers, das durch die Reaktion des Chlors (2) mit der Natriumhydroxyd-Lösung (3) erzeugt wurde, zugibt.